# EUROPEAN PATENT APPLICATION

(11) **EP 2 549 388 A1**
(43) Date of publication of application: **23.01.2013**
(21) Application number: 12765117.2
(22) Date of filing: 28.03.2012
(51) Int. Cl.: G06F 15/173

(54) **COMPUTER SYSTEM**

(30) Priority: 01.04.2011 CN 201110081757
(71) Applicant: Huawei Technologies Co., Ltd., Shenzen, Guangdong 518129 (CN)
(72) Inventor: WANG, Haibin, Shenzhen Guangdong 518129 (CN); LIU, Jiangen, Shenzhen Guangdong 518129 (CN); ZHANG, Jie, Shenzhen Guangdong 518129 (CN)
(74) Representative: Körber, Martin Hans
(86) International application number: PCT/CN2012/073162
(87) International publication number: WO 2012/130134

(57) **Abstract**

A computer system includes m groups of nodes, each group comprises n nodes, wherein m is a natural number greater than or equal to l, n is a natural number greater than or equal to 2, each node includes a first node controller and a second node controller, and the nodes are connected directly or indirectly through the first node controller and the second node controller to exchange information; for directly connected nodes, the first node controller of any one node is correspondingly connected with the first node controller of other nodes, and the second node controller of the any one node is correspondingly connected with the second node controller of the other nodes, thereby forming a dual interconnection architecture between the nodes. The connected nodes in the computer system are directly interconnected through the node controller, and information exchange between nodes can be implemented without using any additional interconnection module. Therefore, less interconnection chips are required, the access path between nodes is shortened, the access delay time is reduced, the cost is reduced, and the system performance is improved.

## Description

### FIELD OF TECHNOLOGY

The present invention relates to the computer field, and in particular, to a computer system.

### BACKGROUND OF THE INVENTION

The perspective of architecture of midrange computer systems (such as commercial servers)in the prior art come roughly in three types: symmetric multi-processor (SMP) architecture, massive parallel processing (MPP) architecture, and non-uniform memory access (NUMA) architecture.

The SMP means that multiple central processing units (CPUs) in a server work symmetrically, without treating any of them as primary or subordinate. All CPUs share the same physical memory, and every CPU spends the same time in accessing any address in the memory. Therefore, the SMP is also known as a uniform memory access (UMA) architecture. An SMP server is characterized by sharing resources, and all resources (including CPU, memory, and I/O) in the system are shared. Such a characteristic leads to a major problem of the SMP server -limited extensibility. For an SMP server, each sharing step may result in a bottleneck for extending the SMP server, and the memory is the most restricted. Every CPU needs to use the same memory bus to access the same memory resource. As the number of CPUs increases, the conflict of accessing the memory increases rapidly, and leads to the waste of CPU resources and drastic deterioration of the CPU performance.

Secondly, the MPP provides another way of extending a system, in which multiple SMP servers are connected through a multi-node interconnected network, cooperate with each other and work together on the same task. To the user, these SMP servers are deemed as a server system. The basic characteristic of the system is that multiple nods (such as each SMP server is a node) are connected through a multi-node interconnected network. Since each node accesses its local resources (memory, storage, and so on) only, the system is a architecture that shares nothing. Therefore, the system is highly extensible. Theoretically, the extension of the system is not limited, up to 512 nodes and thousands of CPUs can be interconnected in the prior art. In an MPP system, each SMP node may run its own operating system and database. However, the problem is the inability of accessing the memory remotely. In other words, the CPU in one node is unable to access the memory of any another node. The information exchange between nodes has to be implemented through the multi-node interconnected network.

Finally, the NUMA is characterized by multiple CPU nodes, and each CPU node is composed of multiple CPUs (such as 4 CPUs) and has an independent local memory and I/O slot. Since all nodes can connect up and exchange information through an interconnection module, and therefore, each CPU is capable of accessing the memories of the entire system. However, accessing a local memory is much faster than accessing a remote memory (the memory of another node in the system), which explains the origin of NUMA. Through the NUMA technology, the problem that the SMP system lacks of extensibility is properly overcome, and one physical server may support hundreds of CPUs. However, the NUMA technology also has defects, because the nodes are interconnected through an interconnection module and the delay of accessing a remote memory is far greater than the time required for accessing the local memory, the system performance is unable to increase linearly with the increase of the CPUs.

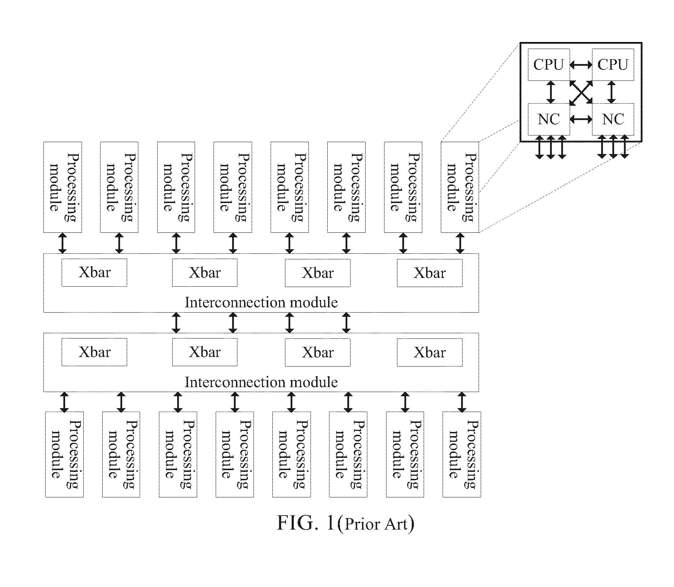

FIG. 1 shows multi-node interconnection architecture commonly used in an existing commercial serverarchitecture. Each node is a data processing module, and includes multiple (such as 2) interconnected CPUs and node controllers (NCs). The nodes or data processing modules are connected through the interconnection module, and the interconnection module is generally composed of multiple interconnection chips such as crossbar (Xbar) switches. Therefore, such architecture that connects up nodes or data processing modules through an interconnection module leads to access delay between nodes, thus affects the operation efficiency of the system. Moreover, this kind of interconnection module requires a large number of various interconnection chips and complicated connection, which increases the error rate and reduces reliability of the system.

### SUMMARY OF THE INVENTION

Embodiments of the present invention provide a computer system with high-efficiency and better reliability.

A computer system provided in an embodiment of the present invention includes m groups of nodes, and each group includes n nodes, wherein m is a natural number greater than or equal to 1, n is a natural number greater than or equal to 2, each node includes a first node controller and a second node controller, and the nodes are connected directly or indirectly through the first node controller and the second node controller to exchange information; for directly connected nodes, the first node controller of any one node is correspondingly connected with the first node controller of other nodes, and the second node controller of the any one node is correspondingly connected with the second node controller of the other nodes, thereby forming a dual interconnection architecture between the nodes.

The connected nodes in the computer system are directly interconnected through the node controllers, and information exchange between nodes can be implemented without using any additional interconnection module. Therefore, less interconnection chips are required, the access path between nodes is shortened, the access delay time is reduced, the cost is reduced, and the system performance is improved.

### BRIEF DESCRIPTION OF THE DRAWING(S)

To describe the technical solution of the embodiments of the present invention more clearly, the following outlines the accompanying drawings involved in description of the embodiments of the present invention or the prior art. Apparently, the accompanying drawings are illustrative rather than exhaustive, and persons of ordinary skill in the art can derive other drawings from them without making any creative effort.

FIG. 1 is a multi-CPU interconnection architecture of a computer system in the prior art;

FIG. 2 is a stereoscopic schematic diagram of a multi-CPU interconnection architecture of a computer system according to a first embodiment of the present invention;

FIG. 3 is a schematic structural diagram of a node of a computer system according to an embodiment of the present invention;

FIG. 4 is a schematic diagram of a multi-CPU interconnection architecture of a computer system according to a second embodiment of the present invention;

FIG. 5 is a stereoscopic schematic diagram of a CPU interconnection architecture of a computer system according to a third embodiment of the present invention;

FIG. 6 is a stereoscopic schematic diagram of node interconnection of the computer system according to the third embodiment of the present invention;

FIG. 7 is a stereoscopic schematic diagram of a CPU interconnection architecture of a computer system according to a fourth embodiment of the present invention; and

FIG. 8 is a schematic connection diagram of a group of nodes of the computer system shown in FIG. 7.

### DETAILED DESCRIPTION OF THE EMBODIMENTS

The following detailed description of the technical solutions of embodiments of the present invention is given in conjunction with the accompanying drawings of embodiments of the present invention to provide a thorough understanding of the present invention. Evidently, the drawings and the detailed description are merely representative of some particular embodiments of the present invention rather than all embodiments. All other embodiments, which can be derived by persons of ordinary skill in the art from the embodiments given herein without making any creative effort, shall fall within the protection scope of the present invention.

A computer system provided in a first embodiment of the present invention includes several nodes that exchange information with each other. Each node is a data processing module and includes several CPUs, several storage units connected with the CPUs in a one-to-one relationship, a first node controller, and a second node controller. The nodes are interconnected in a specific mode, for example, in a layout of quadrangle or prism. Through the first node controller and the second node controller, the nodes are directly or indirectly connected to exchange information. The direct connection means that the nodes are interconnected directly through a physical data transmission line; and the indirect connection means that the nodes, without having any physical data transmission line therebetween, exchange information through forwarding by other nodes. Among the directly interconnected nodes, the first node controller of one node is correspondingly connected with the first node controller of another node, and the second node controller of one node is correspondingly connected with the second node controller of another node. Therefore, the first node controllers of all nodes are interconnected to form an interconnection architecture. Similarly, the second node controllers of all nodes are interconnected to form another interconnection architecture. In this way, a dual interconnection architecture is formed between the nodes.

In this embodiment, the number of nodes is n multiplied by m (n*m), wherein the number of node groups is m, each group includes n nodes, m is a natural number greater than or equal to 1, and n is a natural number greater than or equal to 2. The n nodes in each group are distributed on the same plane, and are interconnected in a specific mode. When n = 2, two nodes in each group are interconnected; when n = 3, each node in one group is connected with its neighboring nodes only, namely, the first node controllers on every two neighboring nodes and the second node controllers on every two neighboring nodes are correspondingly connected respectively, and therefore, these three nodes are interconnected into a dual trilateral interconnection architecture in the form of a loop; when n is greater than or equal to 4, the nodes are connected into a dual n-sided interconnection architecture in the form of a loop, and the nodes diagonally positioned and not adjacent to each other are not connected directly. In this way, when n keeps increasing, the connection between each node and other nodes is unchanged, and the number of interfaces of the node controller is unchanged. Therefore, the computer system will not increase the load of the node controllers and also does not affect the operation efficiency of a single node with the increase of n.

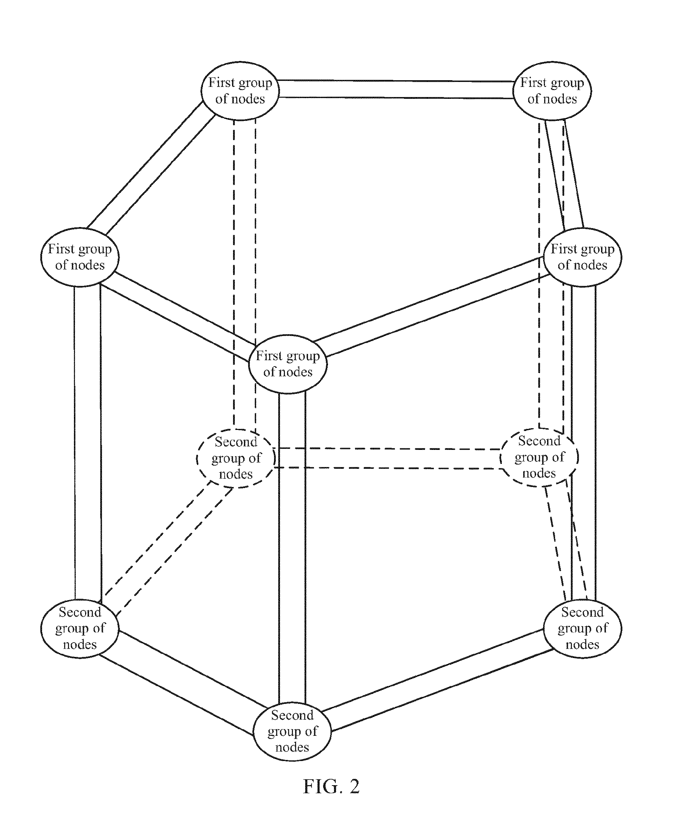

When m = 2, the nodes are divided into two groups, and the n nodes in the first group are connected to the corresponding n nodes of the second group in a one-to-one relationship. As shown in FIG. 2, when n is 5, the dual pentagon formed by connection of the first group of nodes and the dual pentagon formed by connection of the second group of nodes are respectively located on two planes that are parallel to each other. The two nodes that are respectively located on the two planes and vertically aligned with each other are connected directly, and therefore, the two groups of nodes form a dual pentagonal prism interconnection architecture. To facilitate the understanding of the connection relationship between nodes, the space relationship expressions such as "parallel" and "vertical" are used to define the location relationship between nodes. Understandably, in practical application or other embodiments, the specific space location relationship between nodes is not limited so long as the connection relationship between nodes is the same.

When m is greater than or equal to 3, each group of nodes are arranged in a cascaded manner. A node in each group is connected with the corresponding node in next group in a one-to-one relationship. For example, the nodes in group k (k is a natural number greater than or equal 2 and less than m) are respectively connected with the corresponding nodes in group k-1 and group k+1 in a one-to-one relationship. From the perspective of the stereoscopic architecture, the nodes are connected into a dual m-layer n-sided prism interconnection architecture.

In practical application, a routing function is integrated into the node controller, and the node controller supports multiple interconnection interfaces to implement information control and interaction between nodes. Moreover, the system architecture formed by interconnection of the node controllers is characterized by simple architecture and high bandwidth.

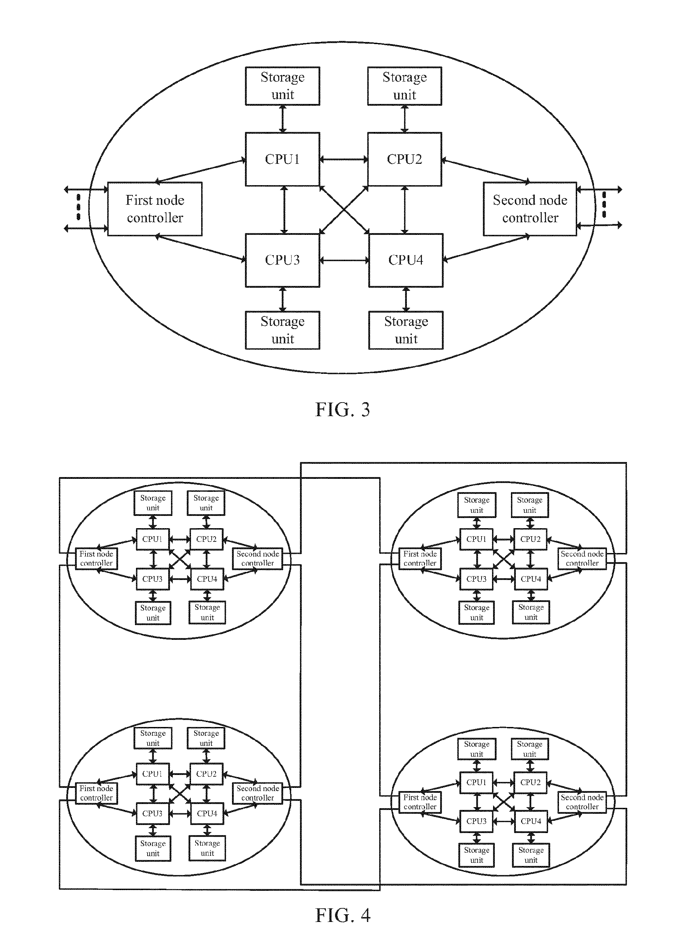

As shown in FIG. 3, each above mentioned node includes 4 CPUs, 2 node controllers, and 4 storage units. The 4 CPUs are connected with the 4 storage units in a one-to-one relationship. That is, each CPU is connected with a storage unit. Interconnection is performed between every two of the 4 CPUs. That is, every two of the 4 CPUs are interconnected. Each CPU is connected with one of the node controllers. To balance the load between the two node controllers, two CPUs are connected with the first node controller (NC₁), and the other two CPUs are connected with the second node controller (NC₂). Through a Quick Path Interconnect (QPI) bus, the connection is performed between the first node controllers or the second node controllers of different nodes, or between the CPUs, or between the CPU and the node controller, so as to implement fast access between different nodes, between different CPUs, and between different storage units. Understandably, in other embodiments, the number of CPUs of a single node and the number of corresponding storage units may change as required and are not limited to specific numbers.

Therefore, the interconnection between nodes is implemented through the node controllers. The first node controller and the second node controller of one node are connected with the first node controller and the second node controller of another node correspondingly. Each node controller has multiple interfaces, two of the interfaces are connected with two CPUs in the node, and the remaining interfaces are connected with the corresponding node controllers of other connected nodes respectively. Specifically, the first node controller of each node is connected with the first node controller of other connected nodes, and the second node controller of each node is connected with the second node controller of other connected nodes, thereby forming a dual interconnection architecture to strengthen the data exchange capability between nodes and enhance the system stability. Besides, the node controllers have a routing function, and can route the information of one node to another node so that the information can be exchanged between nodes without requiring any additional interconnection module. In this way, the system cost is reduced due to less interconnection chips required, the access delay time is reduced due to shortened access path between nodes, and the system performance is improved.

As shown in FIG. 4, a computer system provided in a second embodiment of the present invention includes 4 nodes connected in a dual quadrangle architecture. That is, in this embodiment, n is 4, and m is 1.

The node composition in this embodiment is the same as that of the previous embodiment. Each node includes 4 CPUs (every two of the CPUs are connected with each other), 4 storage units connected to the CPUs in a one-to-one relationship, and 2 node controllers. Two of the 4 CPUs are connected with the first node controller only, and the remaining two CPUs are connected with the second node controller only.

The node in this embodiment differs from the node in the previous embodiment in that: in this embodiment, each node has 4 interfaces, wherein two of the interfaces are connected with the CPUs of this node, and the remaining 2 interfaces are connected with the node controllers corresponding to the neighboring nodes. The first node controller of each node is connected with the first node controllers of other three nodes respectively, and the second node controller of each node is connected with the second node controllers of the other three nodes respectively, thereby forming a dual quadrangle interconnection architecture.

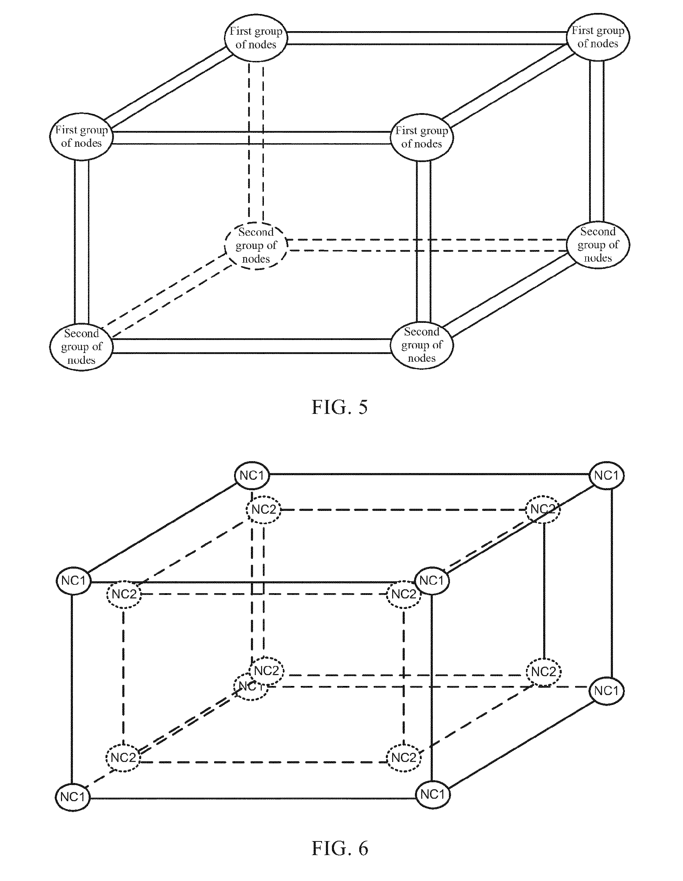

As shown in FIG. 5, a computer system provided in a third embodiment of the present invention includes two groups of nodes. Each group includes 4 nodes and every two of the 4 nodes are connected with each other. That is, in this embodiment, n is 4, and m is 2.

The node composition in this embodiment is the same as that of the previous embodiment. Each node includes 4 CPUs (every two of the CPUs are connected with each other), 4 storage units connected to the CPUs in a one-to-one relationship, and 2 node controllers. Two of the CPUs are connected with the first node controller only, and the remaining two CPUs are connected with the second node controller only. The interconnection relationship between nodes in each group is the same as that in the previous embodiment, and is a dual quadrangle interconnection architecture. The node in this embodiment differs from the node in the second embodiment in that: in this embodiment, each node has 5 interfaces, wherein two of the interfaces are connected with two CPUs in the node through QPI bus, other two interfaces are used for interconnection between neighboring nodes in the same group, and the remaining one interface is used for interconnection between nodes of different groups.

The two groups of nodes above are distributed on two different planes respectively, and correspond to each other. Every node in the first group is connected correspondly with a node in the second group. In other words, the nodes in the first group are connected with the nodes in the second group in a one-to-one relationship. For convenience of description below, a pair of interconnected nodes that belong to different groups are defined as an inter-group node pair; conversely, a pair of nodes that belong to different groups and are not interconnected directly are defined as an inter-group non-node pair; and the interconnected nodes in the same group are defined as an intra-group node pair.

The interconnection relationship between the intra-group node pair and the inter-group node pair also complies with the principle that the first node controller of one node is connected with the first node controller of another node, and the second node controller of one node is connected with the second node controller of another node. That is, the first node controller of any one node is connected with only the first node controller of the other node in the node pair, and the second node controller of any one node is connected with only the second node controller of the other node in the node pair, and therefore, the upper group of nodes and the lower group of nodes in the dual quadrangle interconnection architecture are connected into a dual quadrangular prism interconnection architecture. As shown in FIG. 6 (the first node controller and the second node controller in each corner belong to the same node, and other elements except the node controllers in the node are omitted to highlight the interconnection relationships implemented between nodes through the corresponding node controllers), the connections between the first node controllers of the nodes form an outer quadrangular prism connection architecture, and the connections between the second node controllers of the nodes form an inner quadrangular prism connection architecture.

A computer system provided in a fourth embodiment of the present invention includes several nodes. The number of nodes is n multiplied by m (n*m), wherein the number of node groups is m, each group includes n nodes, m is a natural number greater than or equal to 1, and n is a natural number greater than or equal to 2.

This embodiment differs from the previous embodiment in that: when n is greater than or equal to 4, the n nodes of each group are distributed in the same plane, and the neighboring nodes are interconnected to form an n-sided shape; moreover, each node is connected with other n-3 non-neighboring nodes through diagonals. That is, every two nodes in the same group are connected with each other, and any two nodes in the same group are interconnected directly, which leads to consistent memory affinity between any two nodes, or, in other words, consistent cross-node access speed. This embodiment avoids the trouble of selecting the proper correlated storage node according to different affinity in a NUMA architecture, thus simplifies the cross-node access process in the same group, shortens the access delay between different nodes, and improves the overall operation efficiency of the system.

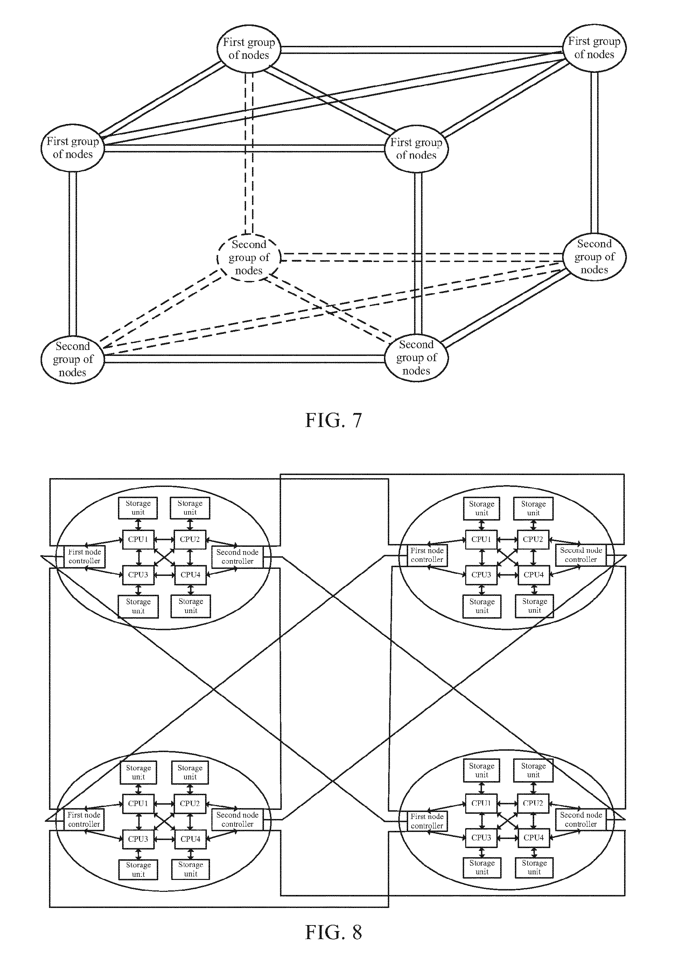

To further clarify the difference between this embodiment and the embodiments described above, the following describes the computer system in detail, supposing n = 4 and m = 2 as an example. As shown in FIG. 7, when n = 4 and m = 2, the computer system includes two groups of nodes, each group having 4 nodes, and every two of the 4 nodes are connected with each other. In this embodiment, each node has 6 interfaces, two of the interfaces are connected with the CPUs of this node, and other three interfaces are connected with the node controllers of each node in the same group, and the remaining one interface is connected with the corresponding node controllers in an inter-group. The first node controller of each node is connected with the first node controllers of other four nodes connected thereto, respectively, and the second node controller of each node is connected with the second node controllers of the other four nodes connected thereto, respectively, thereby forming a cross-interconnection architecture of a dual quadrangular prism.

The node composition in this embodiment is the same as that of the three preceding embodiments. Each node includes 4 CPUs (every two of the CPUs are connected with each other), 4 storage units connected to the CPUs in a one-to-one relationship, and 2 node controllers. Two of the CPUs are connected with the first node controller only, and the remaining two CPUs are connected with the second node controller only.

As shown in FIG. 8, the specific connection of nodes in each group is similar to that in the preceding three embodiments. The difference is: on the basis of the inter-node connection in the preceding embodiments, each node controller in this embodiment has one or more additional interfaces for interconnection of the node controllers located on the diagonals (non-neighboring nodes), and therefore, any two nodes in each group are interconnected directly to form a dual n-sided cross connection architecture.

The nodes are directly interconnected through the node controllers, and the information exchange between nodes can be implemented without using any additional interconnection module. Therefore, less interconnection chips are required, the access path between nodes is shortened, and the access delay time is reduced. Besides, the computer system described above also has good extension compatibility because the interfaces of the node may be added to increase the number of CPUs of each node, the number of the nodes in each group, and the number of the node groups. The CPU interconnection of the computer system is implemented through a 3-layer architecture. The first layer is CPU interconnection within the node, the second layer is the node interconnection in each group of nodes, and the third layer is the interconnection between node groups in a 3-dimensional space. The units in any layer of the 3-layer interconnection architecture are infinitely extensible. For example, the number of the CPUs in each node, the number of the nodes in each nord group, and the number of the node groups are freely extensible. Therefore, the architecture of the computer system is fully open and can be extended as required.

A computer system provided in embodiments of the present invention is described in detail above. Although the principles and implementation of the present invention are described with reference to exemplary embodiments, the embodiments are only intended to help understand the method and core idea of present invention. In addition, with respect to the implementation and application of the present invention, modifications and variations may be made by persons of ordinary skill in the art according to the idea of the present invention. Therefore, the specification should not be construed as a limitation on the present invention.

## Claims

1. A computer system, comprising m groups of nodes, and each group comprises n nodes, wherein m is a natural number greater than or equal to 1, n is a natural number greater than or equal to 2, each node comprises a first node controller and a second node controller, and the nodes are connected directly or indirectly through the first node controller or the second node controller to exchange information; for directly connected nodes, the first node controller of any one node is correspondingly connected with the first node controller of other nodes, and the second node controller of the any one node is correspondingly connected with the second node controller of the other nodes, thereby forming a dual interconnection architecture between the nodes.

2. The computer system according to claim 1, wherein:
the nodes have a routing function, and information on each node can be routed to the directly or indirectly connected nodes through the first node controller and the second node controller.

3. The computer system according to claim 2, wherein:
when n = 2, two nodes in each group are interconnected; when n is greater than or equal to 3, every two neighboring nodes in a same group are interconnected, and therefore, the nodes in the same group are connected in a loop form, and the nodes in each group are connected into a dual n-sided interconnection architecture.

4. The computer system according to claim 3, wherein:
when n is greater than or equal to 3 and m is greater than or equal to 2, all groups of nodes are cascaded, and two neighboring groups of nodes are connected into a m-layer n-sided prism connection architecture, with upper nodes being connected with lower nodes in a one-to-one relationship.

5. The computer system according to claim 4, wherein:
the first node controllers of the directly connected nodes are correspondingly connected respectively and the second node controllers of the directly connected nodes are correspondingly connected respectively to form a dual m-layer n-sided prism interconnection architecture.

6. The computer system according to claim 3, wherein:
when m is 2 and n is 4, the computer system comprises a first group of nodes and a second group of nodes, each group of nodes form a quadrangular connection architecture, the first group of nodes are correspondingly connected with the second group of nodes in a one-to-one relationship, and the nodes form a dual 4-sided prism interconnection architecture through corresponding connections of the first node controllers and the second node controllers.

7. The computer system according to claim 3, wherein:
when m is 1 and n is 4, the computer system comprises four nodes, wherein the four nodes form a dual quadrangular interconnection architecture through corresponding connections of the first node controllers and the second node controllers.

8. The computer system according to claim 2, wherein:
when n is greater than or equal to 4, each node is correspondingly connected with other nodes respectively such that any two nodes in a same group are directly connected with each other, and each group of nodes are interconnected into a n-sided cross connection architecture.

9. The computer system according to claim 8, wherein:
when m is greater than or equal to 2, all groups of nodes are arranged in a cascading manner, and every two neighboring groups of nodes are interconnected, with upper nodes being connected with lower nodes in a one-to-one relationship.

10. The computer system according to claim 9, wherein:
the first node controllers and the second node controllers are correspondingly connected between the connected nodes respectively to form a dual m-layer n-sided prism interconnection architecture or a dual m-layer n-sided prism cross connection architecture.

11. The computer system according to claim 8, wherein:
when m is 2 and n is 4, the computer system comprises a first group of nodes and a second group of nodes, each group of nodes comprise four nodes, every two of the four nodes are interconnected, the nodes in each group are interconnected to form a quadrangular connection architecture, the nodes in the first group are correspondingly connected with the nodes in the second group respectively in a one-to-one relationship, and the nodes form a dual 4-sided prism cross connection architecture through corresponding connections of the first node controllers and the second node controllers between the connected nodes.

12. The computer system according to claim 8, wherein:
when m is 1 and n is 4, the computer system comprises four nodes, wherein the four nodes form a dual quadrangular cross connection architecture through corresponding connections of the first node controllers and the second node controllers.

13. The computer system according to any one of claims 1-13, wherein:
through a QPI bus, first node controllers of the nodes are interconnected, and second node controllers of the nodes are interconnected.

14. The computer system according to any one of claims 1-13, wherein:
each of the nodes comprises the first node controller, the second node controller, four CPUs, and four storage units, wherein every two of the four CPUs are connected with each other, and the four CPUs are correspondingly connected with the four storage units respectively in a one-to-one relationship; two of the CPUs are connected with one node controller, and remaining two CPUs are connected with the other node controller.

15. The computer system according to claim 14, wherein:
through the QPI bus, the nodes are interconnected, the CPUs are interconnected, and the CPUs are connected with the node controllers.

16. The computer system according to claim 15, wherein:
each of the node controllers comprises several interfaces; through the interfaces, the CPUs of different nodes are interconnected; two of the interfaces are connected with two of the CPUs respectively, and remaining interfaces are correspondingly connected with the connected nodes respectively in a one-to-one relationship.
